# DEMANDE DE BREVET EUROPEEN

(11) **EP 1 840 799 A1**
(43) Date de publication de la demande: **03.10.2007**
(21) Numéro de dépôt: 07103992.9
(22) Date de dépôt: 13.03.2007
(51) Int. Cl.: G06K 9/42, G06K 9/68

(54) **Procédé utilisant la multi-résolution des images pour la reconnaissance optique d'envois postaux**

(30) Priorité: 28.03.2006 FR 0651063
(71) Demandeur: Solystic, 94257 Gentilly Cedex (FR)
(72) Inventeur: Caillon, Christophe, 91220 BRETIGNY SUR ORGE (FR); Benyoub, Belkacem, 91120 PALAISEAU (FR)
(74) Mandataire: Prugneau, Philippe

(57) **Abrégé**

Un procédé de traitement d'envois postaux dans lequel on applique un traitement de reconnaissance d'informations sur une image d'un envoi est caractérisé par le fait qu'on forme une image (MNG1) de l'envoi avec une certaine résolution, on applique un traitement de catégorisation sur cette image consistant à extraire et identifier des données représentatives d'une catégorie d'envoi pour déterminer une catégorie d'envoi et on transforme (3) l'image (MNG1) avec une certaine résolution en une image (MNG2) avec une autre résolution déterminée sur la base de la catégorie d'envoi déterminée et on applique (5) le traitement de reconnaissance d'informations sur cette image transformée.

## Description

L'invention concerne un procédé de traitement d'envois postaux dans lequel on applique un traitement de reconnaissance d'informations sur une image d'un envoi.

Ce procédé s'applique plus particulièrement à une installation de tri postal automatisée dans laquelle une lecture automatique par OCR d'adresses inscrites sur les envois postaux sert à l'acheminement et à la distribution de ces envois postaux.

Un procédé de traitement d'envois postaux du genre indiqué plus haut est connu de la demande de brevet EP 1 450 295. Un traitement de binarisation d'une image multi-niveaux de gris spécifiquement adapté à chaque envoi postal est mis en oeuvre sur l'installation de tri postal de manière à améliorer la lecture automatique de l'adresse, par exemple en acheminement et en distribution, par traitement OCR. Le traitement de binarisation d'une image multi-niveaux de gris met en oeuvre des algorithmes sophistiqués pour tenir compte de la diversité des images à traiter. Plus particulièrement des algorithmes ont été développés pour tenter de binariser des images multi-niveaux de gris dans lesquelles l'information d'adresse est peu lisible du fait d'un faible contraste entre le tracé de l'information d'adresse et le fond de l'image, dans lesquelles les caractères de l'information d'adresse sont plus ou moins espacés, distincts les uns des autres selon qu'il s'agit de caractères manuscrits ou au contraire de caractères résultant d'une impression par machine qui peut être une imprimante à aiguilles, une imprimante laser, etc... Malgré les performances accrues de ce procédé de lecture d'adresse, on constate en pratique qu'une partie des envois traités est rejetée faute d'une reconnaissance équivoque et fiable de l'information d'adresse ou est en erreur de lecture.

On connaît également des documents de brevet EP1594077 et W02005/050545 des procédés de traitement d'envois postaux dans lesquels la lecture des adresses inscrites sur les envois est améliorée par combinaison des résultats de plusieurs lectures OCR.

On connaît aussi du document de brevet WO03/086664 un procédé de traitement d'envois postaux qui adapte le niveau de binarisation d'un envoi courant à partir de paramètres extraits d'un envoi précédent. Toutefois, ce procédé ne permet pas d'obtenir un taux de lecture d'adresse satisfaisant.

Le but de l'invention est de proposer un autre procédé de traitement automatique d'envois postaux permettant d'améliorer le taux de lecture et de réduire le taux d'erreur.

A cet effet l'invention à pour objet, un procédé de traitement d'envois postaux dans lequel on forme une image d'un envoi avec une certaine résolution et on applique un traitement OCR de reconnaissance d'adresse postale sur ladite image à une certaine résolution, caractérisé en ce qu'il comprend les étapes suivantes : on applique un traitement de catégorisation sur l'image consistant à extraire et identifier dans l'image de l'envoi des données constituant une empreinte caractéristique d'une certaine catégorie d'envoi parmi plusieurs catégories d'envoi, on calcule une autre résolution d'image à partir de ladite certaine catégorie d'envoi, on transforme l'image avec une certaine résolution en une image avec ladite autre résolution et on applique le traitement OCR de reconnaissance d'adresse postale sur cette image transformée.

Ce procédé s'applique plus particulièrement à la lecture automatique d'une information d'adresse par OCR, mais peut également s'appliquer à d'autres traitements d'image dans le domaine postal tel que par exemple la lecture de codes à barres, le contrôle de l'affranchissement, la reconnaissance de logos... Avec un tel procédé, le niveau de résolution utilisé pour la lecture de l'information d'adresse est spécifiquement adapté pour chaque envoi postal.

Dans les procédés connus, les traitements OCR de reconnaissance automatique d'adresse sont réalisés à partir d'une image ayant une résolution donnée. Une unité de traitement OCR travaille habituellement à résolution fixe qui est de l'ordre de 200 dpi ("dot per inch"). Or, la précision d'un traitement OCR est intimement liée à la résolution de l'image d'entrée. Pour certaines polices de caractères, la résolution de 200 dpi est la résolution optimale tandis que pour d'autres polices de caractères, une résolution de l'ordre de 150 dpi, de 256 dpi ou encore de 300 dpi est meilleure. Par exemple, l'augmentation de la résolution, souvent préconisée, peut améliorer les performances sur certains lots de courrier ayant des adresses inscrites avec de petites polices, mais cela se fait au détriment d'autres lots de courrier ayant des adresses manuscrites (généralement avec des caractères de grande taille) ou inscrites par impression à aiguilles pour lesquels il est important de ne pas couper les caractères en deux, ce qui arrive lorsque la résolution est trop importante et la qualité d'écriture ou d'impression mauvaise. Ainsi, choisir une résolution particulière revient à choisir une résolution de compromis, ce qui aura automatiquement une incidence statistique sur les performances de la lecture OCR. Cette résolution de compromis, déterminée en fonction du traitement postal à effectuer ou des caractéristiques statistiques globales des envois postaux n'est par conséquent pas optimale pour tous les envois postaux à traiter.

L'adaptation spécifique de la résolution de l'image utilisée pour la lecture OCR permet une meilleure lecture OCR de l'adresse.
Le procédé selon l'invention présente en outre les particularités suivantes :
- l'image avec une certaine résolution est une image multi-niveaux de gris et on applique un traitement de binarisation sur cette image avant le traitement de reconnaissance d'adresse postale;
- pour catégoriser les envois on exploite des données statistiques extraites de l'image multi-niveaux de gris de l'envoi, et des données statistiques extraites de l' image binaire de l'envoi, et des données statistiques extraites du résultat du traitement de reconnaissance d'adresse postale sur l'envoi;
- pour catégoriser les envois on exploite en outre des premières données statistiques indicatives du niveau de contraste d'un tracé d'information d'adresse dans une image multi-niveaux de gris de l'envoi, des secondes données statistiques indicatives de la qualité de la typographie du tracé de l'information d'adresse dans une image binaire de l'envoi, des troisièmes données indicatives du type de tracé de l'information d'adresse (tracé manuscrit ou tracé résultant d'une impression par machine), des quatrièmes données statistiques sur la qualité de reconnaissances de mots et caractères et des cinquièmes données statistiques indicatives de la largeur et de la hauteur des caractères;
- l'image transformée est en outre une image multi-niveaux de gris et on exploite les données de la catégorisation pour binariser l'image transformée en fonction de la catégorie d'envoi ;
- on réalise un traitement OCR sur l'image avec une certaine résolution pour obtenir un premier résultat et un traitement OCR sur l'image transformée pour obtenir un deuxième résultat puis on combine lesdits premier et deuxième résultats des traitements OCR ;
- la transformation consiste en un traitement de ré-échantillonnage par interpolation de l'image visant à augmenter ou diminuer la résolution;
- pour catégoriser les envois, on exploite un classifieur neuronal à apprentissage supervisé ;
- la transformation consiste en un traitement par interpolation;
- un résultat de la combinaison desdits premier et deuxième résultats des traitements OCR correspond au premier résultat ou au deuxième résultat si les deux résultats sont corrélés, au premier résultat si le premier résultat constitue une information d'adresse lisible ou au deuxième résultat si le deuxième résultat constitue une information d'adresse lisible, et dans lequel si le premier résultat et le deuxième résultat sont contradictoires, on exploite dans la combinaison des taux de confiance associés aux résultats produits par les traitement OCR.

Le procédé selon l'invention présente en outre l'avantage de nécessiter uniquement une acquisition d'image à résolution classique ou standard de l'ordre de 200dpi. Pour obtenir une image transformée de résolution plus importante que l'image d'origine avec une certaine résolution, il suffit d'étendre cette résolution par interpolation. Une interpolation sur une image multi-niveaux de gris donne un résultat très satisfaisant pour un traitement subséquent par OCR, contrairement à une interpolation sur une image binaire qui a déjà subi une perte importante d'information.

Dans le procédé selon l'invention, l'extraction de données constituant une empreinte de l'envoi postal ou le traitement OCR sur l'image avec une certaine résolution met en oeuvre un traitement dit polyvalent dans le sens où la résolution d'acquisition de l'image multi-niveaux de gris n'est pas spécifiquement adaptée à la catégorie d'envoi. Par catégories d'envoi, il faut comprendre des catégories de tracé d'information d'adresse dans lesquelles les envois sont classés selon que l'information d'adresse est manuscrite ou résultant d'une impression par machine ; inscrite avec un faible contraste dans l'image multi-niveaux de gris ou inscrite avec un fort niveau de contraste dans l'image multi-niveaux de gris ; avec des caractères imprimés par une machine d'impression à aiguilles ou avec des caractères imprimés par une machine d'impression à laser ; avec des caractères disjoints ou avec des caractères chaînés, etc....

La résolution de l'image multi-niveaux de gris transformée est déterminée de manière spécifique pour chaque envoi en fonction de la catégorie d'envoi auquel l'envoi appartient. A titre d'exemples non limitatifs, l'Homme du métier sait qu'une résolution standard (200dpi) convient bien pour une image avec un tracé d'information d'adresse constitué de caractères de taille ordinaire, tandis qu'une haute résolution (300dpi) convient bien pour une image avec des caractères de petite taille; aussi, une forte résolution convient bien pour une écriture résultant d'une impression laser par machine, généralement de petite taille, et une faible résolution convient bien pour une écriture manuscrite, généralement de grande taille; etc...

L'invention sera mieux comprise à la lecture de la description qui suit et à l'examen des figures qui l'accompagnent. Cette description n'est donnée qu'à titre d'exemple indicatif et nullement limitatif de l'invention.

La figure 1 représente sous la forme d'un schéma bloc le procédé selon l'invention.

La figure 2 illustre de façon schématique la combinaison des résultats de deux traitements OCR.

L'idée à la base de l'invention est donc d'appliquer sur une image multi-niveaux de gris comportant une information d'adresse, après une première lecture automatique de l'information d'adresse, un second traitement plus adapté que le premier traitement à certaines spécificités du tracé de l'information d'adresse.

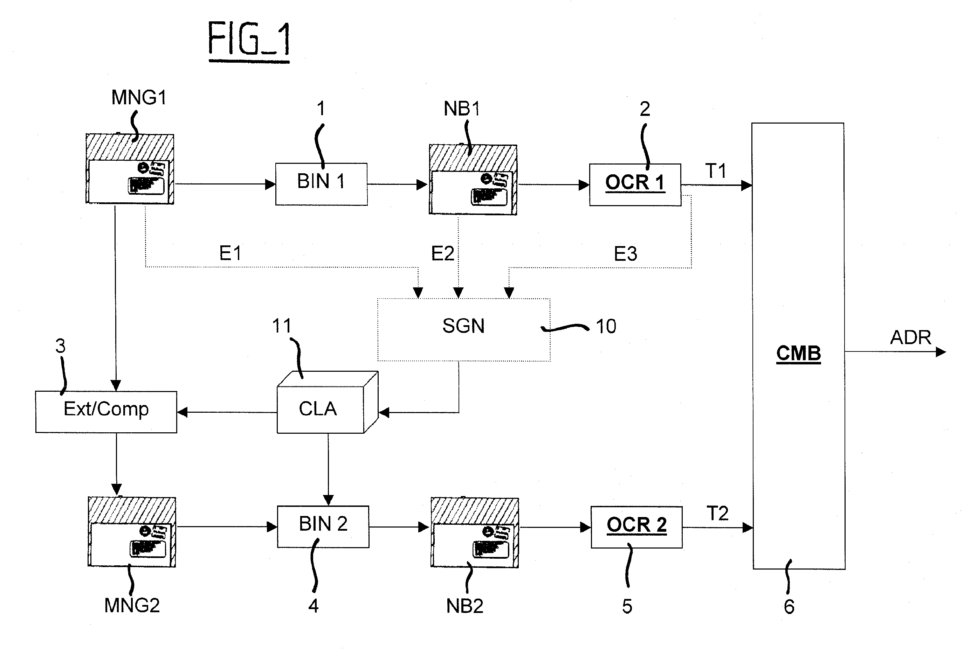

Sur la figure 1, une première image multi-niveaux de gris MNG1 de la surface d'un envoi postal comportant une information d'adresse est acquise avec une certaine résolution, dite polyvalente, permettant une lecture OCR correcte sur un spectre étendu de catégories d'envoi ou catégories de tracé d'information d'adresse, au moyen d'une caméra, d'un scanner ou de tout autre dispositif d'acquisition d'image. La première image MNG1 est d'abord transformée par un premier traitement de binarisation polyvalent (étape 1) en une première image binaire NB1. L'homme du métier connaît des algorithmes de binarisation polyvalents qui fonctionnent de façon statistiquement satisfaisante pour la lecture OCR sur un spectre étendu de catégories d'envoi.

La première image binaire NB1 est envoyée à une unité OCR en vue d'un premier traitement OCR1 (étape 2) de lecture automatique de l'information d'adresse, ou reconnaissance d'informations sur une image de l'envoi, fournissant un premier résultat OCR T1.

Des données constituant une empreinte 10 ou signature sont extraites de la première image multi-niveaux de gris MNG1 et/ou de la première image binaire NB1 et/ou des résultats de la première analyse automatique OCR1. L'extraction de ces données est symbolisée par les flèches E1, E2 et E3.

L'empreinte 10 contient à titre d'exemple :
- des données extraites du traitement OCR1 et indicatives du type de tracé (manuscrit / résultant d'une impression par machine) de l'information d'adresse ;
   les coordonnées spatiales du bloc d'adresse dans l'image binaire rendues par le traitement OCR1 ;
- des données statistiques extraites de l'image binaire NB1 et du traitement OCR1 et indicatives de la qualité de la typographie du tracé de l'information d'adresse : moyenne des densités des composantes connexes (pixels chaînés dans l'image binaire) ou d'autres primitives primaires; nombre de composantes connexes par caractère de l'information d'adresse ; nombre de caractères par composante connexe ; largeur et hauteur moyenne des caractères ; nombre de parasites par caractère ; moyenne des scores de reconnaissance des meilleurs candidats sur tout le bloc d'adresse.
- des données statistiques extraites de l'image multi-niveaux de gris et indicatives du niveau de contraste du tracé de l'information d'adresse dans l'image multi-niveaux de gris: niveau de gris moyen des caractères dans l'image multi-niveaux de gris; écart-type de l'histogramme des niveaux gris des caractères ; niveau de gris moyen du fond de l'image multi-niveaux de gris ; écart-type de l'histogramme du fond de l'image multi-niveaux de gris.

Ces données extraites constituant l'empreinte 10 servent à catégoriser l'envoi postal ou plus particulièrement le tracé de l'information d'adresse de l'envoi postal. Les données de catégorisation peuvent être appliquées en entrée d'un classifieur 11 apte à identifier une catégorie d'envoi et la résolution la plus adaptée à la catégorie d'envoi, c'est à dire permettant la meilleure lecture OCR de l'envoi postal.

La première image multi-niveaux de gris MNG1 est transformée à l'étape 3 en une seconde image multi-niveaux de gris MNG2 ayant la résolution identifiée par le classifieur 11. Cette transformation consiste en un ré-échantillonnage de la première image multi-niveaux de gris MNG1, c'est à dire en une extension de la résolution cette image MNG1 ou en une diminution de la résolution de cette image MNG1, par exemple par interpolation bilinéaire, selon la résolution de la première image multi-niveaux de gris et la résolution identifiée par le classifieur 11.

Le principe du ré-échantillonnage consistant à modifier la résolution d'une image pour augmenter ou diminuer cette résolution est bien connu dans le domaine du traitement de l'image. Le traitement de ré-échantillonnage peut consister en la création et l'insertion de nouveaux pixels entre les pixels existant ou en le remplacement d'un ensemble de pixels en un unique pixel. Un tel traitement de ré-échantillonnage peut être par exemple réalisé par interpolation bilinéaire. L'interpolation linéaire permet d'estimer l'intensité (ici le niveau de gris) d'un pixel quelconque par pondération de l'intensité de ses quatre voisins les plus proches avec des coefficients inversement proportionnels à la distance.

Le classifieur 11 est également apte à identifier le traitement de binarisation spécialisé le plus adapté à la catégorie d'envoi parmi plusieurs traitements de binarisation spécialisés. On soumet ensuite à l'étape 4 la seconde image multi-niveaux de gris MNG2 au traitement de binarisation BIN2 spécialisé identifié par le classifieur 11 pour obtenir une seconde image binaire NB2.

Des algorithmes de binarisation spécialisés tels que Bin2 pour la binarisation d'images ayant un fond bruité, d'images dans lesquelles les informations d'adresse sont manuscrites, d'images dans lesquelles les informations d'adresse sont dactylographiées, etc... sont connus de l'Homme du métier. Ces algorithmes utilisent selon le cas entre autres les contrastes adaptatifs, des opérateurs différentiels, des opérateurs passe bas ou encore des seuillages dynamiques.

La seconde image binaire NB2 peut ensuite être envoyée à une unité OCR pour un second traitement OCR2 de lecture automatique (étape 5) fournissant un second résultat OCR T2.

Le classifieur 11 peut être par exemple un réseau de neurones à apprentissage supervisé ou un système expert à base de connaissance fonctionnant en logique floue.

Le classifieur 11 peut comprendre par exemple un index mettant en correspondance catégories d'envoi, représentées chacune par un ensemble spécifique de données représentatives, résolutions spécifiques et traitements de binarisation spécifiques. L'apprentissage consiste à déterminer la meilleure résolution et le meilleur traitement de binarisation pour chaque catégorie d'envoi. Ces paramètres peuvent par exemple être déterminés expérimentalement au préalable en réalisant une succession de traitements OCR sur un envoi de chaque catégorie d'envoi en modifiant la résolution de l'image d'entrée et/ou le traitement de binarisation. La résolution et/ou le traitement de binarisation avec lesquels la lecture de l'information d'adresse a été la meilleure sont déterminés par un opérateur à partir des résultats des différents traitements OCR. Les données représentatives de la catégorie d'envoi extraites de l'envoi sont alors mémorisées dans le classifieur en correspondance avec cette résolution la mieux adaptée et ce traitement de binarisation le mieux adapté. La résolution et le traitement de binarisation peuvent être appris simultanément ou indépendamment.

Le classifieur identifie la catégorie à laquelle appartient un envoi en identifiant par exemple la catégorie d'envoi pour laquelle les données représentatives présentent le plus de similitudes avec les données représentatives extraites de l'envoi.

Avec le procédé selon l'invention, on a constaté qu'en combinant les résultats T1 et T2 des deux traitements OCR1 et OCR2, on obtient un taux de lecture en sortie de cette combinaison supérieur au taux de lecture en sortie du premier traitement OCR1 et également supérieur au taux de lecture en sortie du second traitement OCR2.

On a aussi constaté qu'en combinant les résultats T1 et T2 respectivement en sortie du premier traitement OCR1 et du second traitement OCR2, on peut réduire le taux d'erreur global en comparaison du taux d'erreur particulier obtenu en sortie du premier traitement OCR1 et du taux d'erreur obtenu en sortie second traitement OCR2.

Sur la figure 1, l'étape 6 représente le processus de combinaison des résultats T1 et T2. Ce processus de combinaison peut consister dans l'utilisation de vecteurs résultats produits en sortie de l'unité OCR effectuant un premier et un second traitement OCR ainsi que de taux de confiance associés à ces vecteurs résultats. Le processus de combinaison peut également utiliser un système expert permettant de corréler les hypothèses d'adresses en utilisant les liens obtenus au niveau sémantique à travers la base de données d'adresses. L'intérêt de ce processus de combinaison des résultats T1 et T2 est qu'il permet, en particulier d'améliorer le taux de lecture sur les images binaires NB2 en cas de rejet de l'information d'adresse dans le traitement OCR1 ; d'améliorer le taux de lecture global par récupération dans le traitement OCR2 des résultats de classification du traitement OCR1. Des processus de combinaison de résultats OCR sont notamment connus des documents de brevet W02005/050545 et EP1594077.

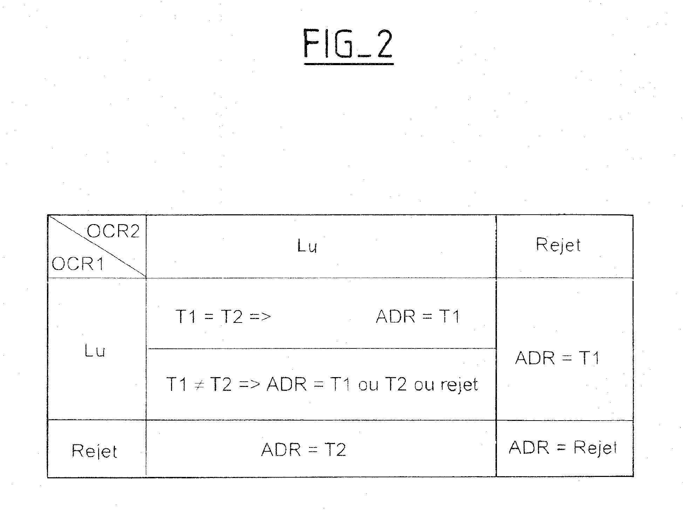

Plus particulièrement en se référant à la figure 2, les traitements OCR1 et OCR2 peuvent avoir extrait une ou deux informations contextuelles d'adresse, voire aucune en cas d'échec sur les deux images binaires NB1, NB2. Selon l'invention, la combinaison (étape 6) des informations contextuelles d'adresse T1 et T2 consiste à former une information d'adresse, indiquée par ADR sur les figures, dans le cas où deux informations contextuelles T1 et T2 sont lues et sont corrélées, ce qui est symbolisé par T1 = T2 => ADR = T1. Si une seule information contextuelle T1 ou T2 est lue, elle est retenue comme étant l'information d'adresse recherchée, ce qui est symbolisé par les blocs ADR = T1 ou ADR = T2. Si deux informations contextuelles contradictoires T1 et T2 sont lues, un arbitrage prenant en compte les taux de confiance respectifs des informations contextuelles T1 et T2 est nécessaire pour déterminer quelle adresse ADR doit être retenue, ce qui est symbolisé par T1≠ T2 => T1 ou T2 ou « rejet » sur la figure 2. Enfin, aucune information d'adresse n'est formée si aucune information contextuelle n'est extraite des images binaires NB1 et NB2, ce qui correspond au bloc ADR = rejet.

Dans un tel procédé, la première image multi-niveaux de gris peut avantageusement être acquise avec une résolution classique de 200dpi du fait qu'une extension de la résolution par interpolation sur une telle image multi-niveaux de gris donne une image satisfaisante pour réaliser un traitement OCR. Il n'est par conséquent pas nécessaire d'acquérir des images en haute résolution à 256 ou 300 dpi pour traiter des images avec de telles résolutions. Ainsi, le procédé selon l'invention peut être mis en oeuvre sans nécessité de disposer d'une électronique d'acquisition et de traitement d'image capable de traiter un flux de pixels très important, représentant de l'ordre de 56% d'augmentation de flux pour un passage d'une résolution 200dpi à une résolution 256dpi et de l'ordre de 125% d'augmentation de flux pour un passage de résolution 200dpi à 300dpi. Selon les installations et les applications de tri, une telle augmentation de la résolution d'acquisition impliquerait un surcoût très important pour disposer d'une caméra ou d'un scanner aux capacités plus élevées et d'une chaîne de traitement d'image (transfert, stockage, binarisation, lecture...) avec une puissance opérationnelle ou de calcul adaptée. De plus, il n'existe pas sur le marché de caméra ou de dispositif d'acquisition d'image permettant d'acquérir une image de très haute résolution lorsque les envois postaux sont dépilés très rapidement, de l'ordre d'une dizaine d'envois par seconde, en série dans l'installation de tri.

De plus, les coordonnées spatiales du bloc d'adresse ou zone d'intérêt sont connues du résultat T1 du premier traitement OCR1 et, par conséquent, le traitement de ré-échantillonnage peut n'être appliqué qu'à cette zone d'intérêt, ce qui restreint les calculs nécessaires à une telle opération. Le procédé selon l'invention présente donc un avantage supplémentaire sur un procédé dans lequel par exemple une image d'un envoi est acquise avec une certaine résolution, cette image est transformée en une image de résolution différente fixée préalablement, par exemple par extension par interpolation, puis dans lequel un traitement OCR est réalisé sur chacune de ces images.

Le procédé selon l'invention peut également être mis en oeuvre sans que le second traitement de binarisation 4 soit spécifiquement adapté à l'envoi. Le second traitement de binarisation peut, comme le premier traitement de binarisation consister en un traitement de binarisation polyvalent.

A titre d'exemple, l'adaptation spécifique de la résolution de l'image selon l'invention sur une plage de 150 à 300 dpi avant traitement OCR, sur un lot d'envois postaux présentant une information d'adresse dactylographiée, permet de réduire de 15% les rejets de lecture par rapport à un traitement OCR à partir d'une image à 200dpi. Une combinaison, telle que décrite en référence à la figure 1, de l'adaptation spécifique de la résolution de l'image sur une plage de 150 à 300 dpi et d'un traitement de binarisation spécifiquement adapté avant traitement OCR permet quant à elle de réduire de 30% les rejets de lecture par rapport à un traitement OCR à partir d'une image à 200dpi ayant subie un traitement de binarisation polyvalent.

La portée de l'invention n'est pas limitée au mode de réalisation du procédé décrit ci-dessus mais s'étend également à toute variante accessible de manière évidente par l'Homme du métier. Aussi, le traitement de catégorisation consistant à extraire et à identifier des données représentatives de catégories d'envoi n'inclut pas nécessairement un traitement OCR mais peut consister en une extraction de données appropriées avec pour seule fin de catégoriser les envois. Encore, si le premier traitement OCR1 donne comme résultat une information d'adresse sûre, sans équivoque, l'installation de tri peut passer au traitement d'un autre envoi sans qu'il soit nécessaire d'effectuer les étapes suivantes du procédé.

## Revendications

1. Un procédé de traitement d'envois postaux dans lequel on forme une image (MNG1) d'un envoi avec une certaine résolution et on applique un traitement OCR de reconnaissance d'adresse postale sur ladite image (MNG1) à une certaine résolution, **caractérisé en ce qu'**il comprend les étapes suivantes : on applique un traitement de catégorisation sur l'image (MNG1) consistant à extraire (E1,E2,E3) et identifier (10,11) dans l'image de l'envoi des données constituant une empreinte caractéristique d'une certaine catégorie d'envoi parmi plusieurs catégories d'envoi, on calcule une autre résolution d'image à partir de ladite certaine catégorie d'envoi, on transforme (3) l'image (MNG1) avec une certaine résolution en une image (MNG2) avec ladite autre résolution et on applique (5) le traitement OCR de reconnaissance d'adresse postale sur cette image transformée.

2. Le procédé selon l'une des revendications précédentes, dans lequel le traitement de catégorisation comprend un traitement OCR de reconnaissance d'adresse postale (2).

3. Le procédé selon la revendication 2, dans lequel l'image (MNG1) avec une certaine résolution est une image multi-niveaux de gris et dans lequel on applique (1) un traitement de binarisation sur cette image avant le traitement OCR de reconnaissance d'adresse postale (2).

4. Le procédé selon la revendication 3, dans lequel pour catégoriser les envois on exploite des données statistiques (E1) extraites de l'image multi-niveaux de gris (MNG1) de l'envoi, et des données statistiques (E2) extraites d'une image binaire (1) de l'envoi, et des données statistiques (E3) extraites du résultat (T1) du traitement OCR de reconnaissance d'adresse postale (2) sur l'envoi.

5. Le procédé selon la revendication 3 ou 4, dans lequel pour catégoriser les envois on exploite des premières données statistiques indicatives du niveau de contraste d'un tracé d'information d'adresse dans une image multi-niveaux de gris de l'envoi, des secondes données statistiques indicatives de la qualité de la typographie du tracé de l'information d'adresse dans une image binaire de l'envoi, des troisièmes données indicatives du type de tracé de l'information d'adresse (tracé manuscrit ou tracé résultant d'une impression par machine), des quatrièmes données statistiques sur la qualité de reconnaissances de mots et caractères et des cinquièmes données statistiques indicatives de la largeur et de la hauteur des caractères.

6. Procédé selon l'une des revendications précédentes, dans lequel l'image (MNG2) transformée est en outre une image multi-niveaux de gris et dans lequel on exploite les données de la catégorisation pour binariser (4) l'image transformée en fonction de la catégorie d'envoi.

7. Procédé selon l'une des revendications précédentes, dans lequel on réalise un traitement OCR (2) sur l'image (MNG1) avec une certaine résolution pour obtenir un premier résultat (T1) et un traitement OCR (5) sur l'image (MNG2) transformée pour obtenir un deuxième résultat (T2) et dans lequel on combine (6) lesdits premier et deuxième résultats (T1, T2) des traitements OCR.

8. Le procédé selon l'une des revendications précédentes, dans lequel la transformation (3) consiste en un traitement de ré-échantillonnage.

9. Le procédé selon la revendication 7, dans lequel pour catégoriser les envois, on exploite un classifieur (11) neuronal à apprentissage supervisé.

10. Le procédé selon l'une des revendications 8 ou 9, dans lequel la transformation (3) consiste en un traitement par interpolation.

11. Le procédé selon la revendication 7, dans lequel un résultat de la combinaison (6) desdits premier et deuxième résultats (T1,T2) des traitements OCR correspond au premier résultat (T1) ou au deuxième résultat (T2) si les deux résultats sont corrélés, au premier résultat (T1) si le premier résultat (T1) constitue une information d'adresse lisible ou au deuxième résultat (T2) si le deuxième résultat (T2) constitue une information d'adresse lisible, et dans lequel si le premier résultat (T1) et le deuxième résultat (T2) sont contradictoires, on exploite dans la combinaison (6) des taux de confiance associés aux résultats (T1,T2) produits par les traitement OCR (2,5).
